# EUROPEAN PATENT SPECIFICATION

(11) **EP 1 315 014 B1**
(45) Date of publication and mention of the grant of the patent: **11.01.2006**
(21) Application number: 02258012.0
(22) Date of filing: 20.11.2002
(51) Int. Cl.: G02B 23/18, G02B 7/06

(54) **Binocular**
Doppelfernrohr
Jumelle binoculaire

(30) Priority: 21.11.2001 JP 2001356194
(43) Date of publication of application: 28.05.2003
(73) Proprietor: Nikon Vision Co., Ltd., Tokyo (JP); NIKON CORPORATION, Tokyo (JP)
(72) Inventor: Aikawa, Yasuyuki, c/o Nikon Corporation, Tokyo (JP)
(74) Representative: Burke, Steven David

(56) References cited:
- JP-U- 6 059 808
- US-A- 5 212 591
- US-A- 6 031 663
- PATENT ABSTRACTS OF JAPAN vol. 2000, no. 02, 29 February 2000 (2000-02-29) -& JP 11 326782 A (OLYMPUS OPTICAL CO LTD), 26 November 1999 (1999-11-26)

## Description

This application claims the benefit of Japanese Patent application No. 2001-356194 which is hereby incorporated by reference.

### BACKGROUND OF THE INVENTION

### Field of the Invention

The present invention relates to a binocular which is provided with a focus adjusting mechanism and a dioptric difference adjusting mechanism.

### Related Background Art

In a binocular provided with a focus adjusting mechanism and a dioptric difference adjusting mechanism, a focus adjusting ring which is normally handled by a user is disposed on a support base for connecting a left lens unit and a right lens unit. On the other hand, a diopter adjusting ring is disposed in an ocular portion of either one of the right and left lens units, or disposed on the base.

With a structure in which the diopter adjusting ring is disposed on the base, it is arranged such that the diopter adjusting ring is normally disposed on an end face on the ocular side of the base or an end face on the objective side so that a graduated scale on an end face of the diopter adjusting ring can be recognized by the user from an end face of the base.

In order to obtain a binocular having a structure simpler than that of the conventional art, it is desired to arrange the diopter adjusting ring and the focus adjusting ring in a manner different from that of a conventional art. However, it is required to maintain a handling equal to or easier for the user than that of the conventional art even with a different arrangement of these rings.

US 6,031,663 relates to a binocular including two telescope systems with parallel axes and movable eyepieces, and operation controls between the telescope systems, including a co-axial focus adjustment mechanism and a diopter correction mechanism.

US 5,212,591 also relates to a binocular including telephotographic optical systems with parallel optical axes, including a co-axial focus adjustment mechanism and a diopter adjustment mechanism.

### SUMMARY OF THE INVENTION

An object of the present invention is to provide a binocular which is equipped with a focus adjusting ring and a diopter adjusting ring to obtain an excellent workability in a simple structure.

In order to achieve the above object, according to the present invention, there is provided such a binocular as described below.

Specifically, the binocular of the present invention is as set out in claim 1.

A spiral curve may be formed on an outer peripheral surface of said diopter adjusting ring as an indicator for indicating an amount of rotation of said diopter adjusting ring-

Said diopter adjusting ring may be disposed on the ocular side, compared with said focus adjusting ring and a vortical curve may be formed on an end face on the ocular side of said diopter adjusting ring as an indicator for indicating an amount of rotation of said diopter adjusting ring.

### BRIEF DESCRIPTION OF THE DRAWINGS

Fig. 1 is a top view of a binocular according to a first embodiment of the present invention;
Fig. 2 is a cut-away cross-sectional view of the binocular according to the first embodiment of the present invention;
Fig. 3 is a side view of a binocular on an ocular side according to a second embodiment of the present invention;
Fig. 4 is a top view of the binocular according to the second embodiment of the present invention;
Fig. 5 is a top view of a binocular according to a third embodiment of the present invention, for showing the essential part thereof only;
Fig. 6 is a top view of a binocular according to a fourth embodiment of the present invention, for showing the essential part thereof only;
Fig. 7 is a top view of a binocular according to a fifth embodiment of the present invention, for showing the essential part thereof only; and
Fig. 8 is a schematic view of adjusting rings of the binocular shown in Fig. 7, as viewed from the eyepiece side.

### DETAILED DESCRIPTION OF THE PREFERRED EMBODIMENTS

Preferred embodiments of the present invention will be described below with reference to the drawings.

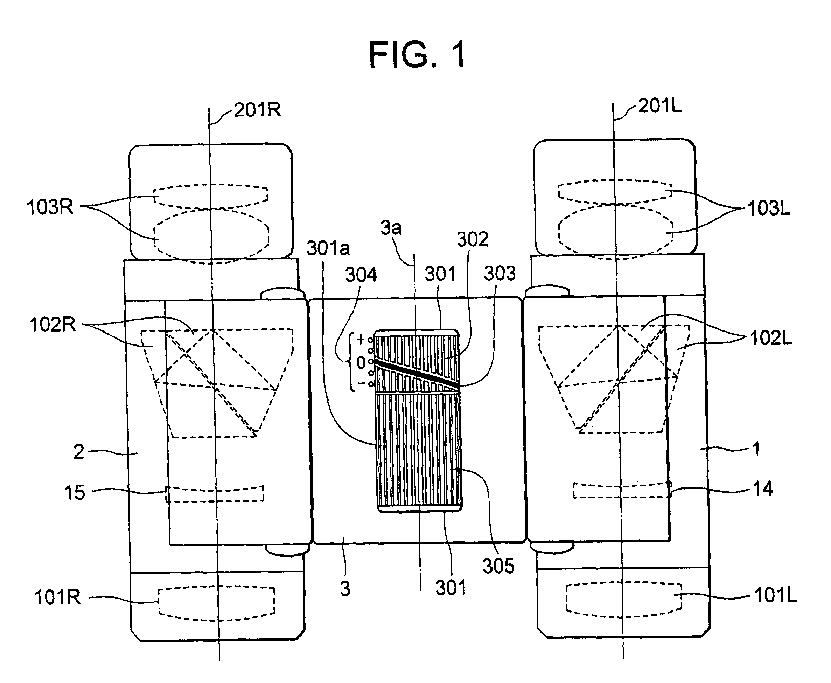

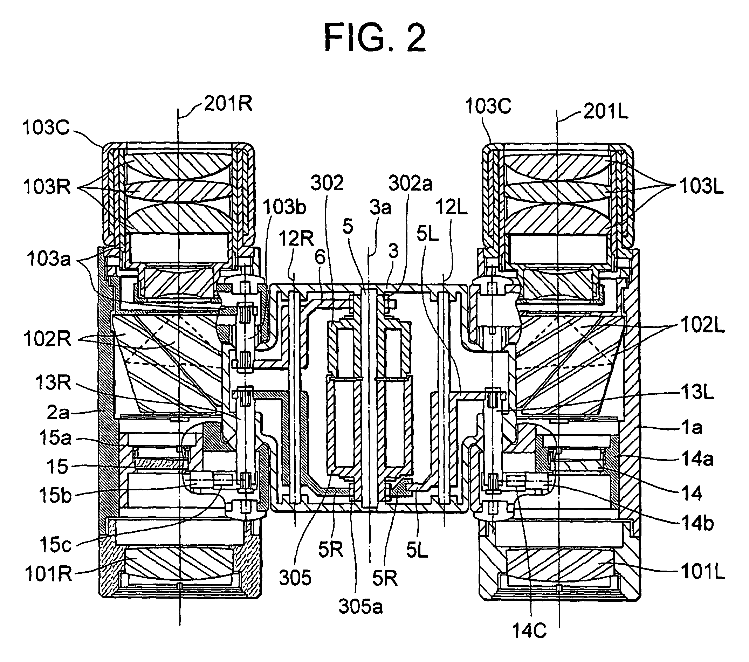

First, a binocular according to the first embodiment will be described with reference to Figs. 1 and 2. The binocular shown in Figs. 1 and 2 has left and right lens units 1 and 2, and a support base 3 for connecting or bridging the left and right lens units 1 and 2.

The base 3 has an opening 301 at the center on the top face thereof, and a diopter adjusting ring 302 and a focus adjusting ring 305 are disposed in this opening 301 side by side along an axis 3a which is parallel to the optical axes of the lens units 1 and 2. The outer diameter of the diopter adjusting ring 302 is equal to the outer diameter of the focus adjusting ring 305, and the both rings are formed with crease-like or longitudinal projection-and-grooves on the outer peripheral surfaces thereof along the axial direction in order to facilitate an operation for rotating the rings by handling these outer peripheral surfaces with fingers.

Indicators for indicating an amount of diopter adjustment are formed on the outer peripheral surface of the diopter adjusting ring 302 and on the edge of one side 301a of the opening 301. In the present embodiment, a spiral curve 303 which is formed on the outer peripheral surface of the diopter adjusting ring 302 and a graduated scale 304 formed on the edge of the side 301a of the opening 301 are used as the indicators. The graduated scale 304 includes points for dividing the one side 301a of the opening 301 equi-distantly, a number 0 at the side of the central point for indicating that an amount of diopter adjustment at that position is zero, a symbol + for indicating that the graduations on the ocular side with respect to zero show that an amount of diopter adjustment is positive, and a symbol - for indicating that the graduations on the objective side with respect to zero show that an amount of diopter adjustment is negative. When the diopter adjusting ring 302 is rotated, the spiral curve 303 is moved in the direction of the axis 3a in proportion to an amount of the rotation, so that a position at which the spiral curve 303 intersects the side 301a of the opening 301 moves along the side 301a. As a result, it is possible to recognize an angle of rotation of the diopter adjusting ring 302 by recognizing the position at which the spiral curve 303 intersects the side 301a of the opening 301 by the use of the graduated scale 304, whereby the amount of diopter adjustment can be obtained. Note that an inclination of the spiral curve 303 with respect to the axis 3a is fixed, irrespective of the angle of rotation. An internal structure of the base 3 will be described later.

The left lens unit 1 comprises an objective lens 101L, a focus adjusting lens 14, an image erecting prism 102L, an eyepiece 103L, and a lens barrel 1a for accommodating these components. In the same manner, the right lens unit 2 comprises an objective lens 101R, a focus adjusting lens 15, an image erect prism 102R, an eyepiece 103R, and a lens barrel 2a for accommodating these components. The optical components in the left lens unit 1 and those in the right lens unit 2 are disposed in such a manner that the optical axes 201L and 201R thereof are respectively in alignment. The focus adjusting lenses 14 and 15 of the right and left lens units 1 and 2 are supported by lens frames 14a and 15a which are movable in the directions of the optical axes 201L and 201R. The eyepiece 103R of the right lens unit 2 is supported by an eyepiece frame 103a which is movable in the direction of the optical axis 201R. Note that roof prisms are used as the image erect prisms 102L and 102R. In addition, each of the left and right lens units 1 and 2 is provided with an eye cushion 103c which can be rotatably drawn from or received into the ocular portion.

As shown in Fig. 2, one end of a focus adjusting coupling shaft 13L is inserted into the left lens unit 1, so as to be coupled to the focus adjusting lens frame 14a through coupling members 14b and 14c. The other end of the focus adjusting coupling shaft 13L is inserted into the base 3. On the other hand, one end of a focus adjusting coupling shaft 13R is inserted into the right lens unit 2, so as to be coupled to the focus adjusting lens frame 15a through coupling members 15b and 15c. Furthermore, one end of a diopter adjusting coupling shaft 103b is inserted into the right lens unit 2 on the side of the eyepiece 103R, so as to be coupled to the eyepiece lens frame 103a. The other end of the focus adjusting coupling shaft 13R and the other end of the diopter adjusting coupling shaft 103b are inserted into the base 3.

The left and right lens units 1 and 2 are rotatable respectively with respect to the base 3 around the focus adjusting coupling shafts 13L and 13R each serving as a rotary shaft. With this arrangement, the binocular can be bent. The diopter adjusting coupling shaft 103b also serves as a rotary shaft when the lens unit 2 is rotated. Note that the left and right lens units 1 and 2 do not rotate with respect to the base 3 respectively unless the user intentionally applies a force for the rotation, and a rotary torque for rotating the left or right lens units 1 and 2 is preset to have the magnitude up to the extent to permit smooth fine adjustment when the user applies the force for the rotation.

Inside the base 3, there are disposed a support shaft 5 which is passed through the diopter adjusting ring 302 and the focus adjusting ring 305 for rotatably supporting these rings, and guide shafts 12L and 12R. The support shaft 5 and the guide shafts 12L and 12R are parallel to the optical axes 201L and 201R, and the both sides of each of the shafts are secured to the base 3. The focus adjusting ring 305 is equipped with a tip end portion 305a, on which a male screw is formed on the outer periphery thereof. This tip end portion 305a is fitted in a female screw of the basic portion of a member 5R. One of the tip ends of the member 5R is fitted in the basic portion of a member 5L. The other of the tip ends of the member 5R and the tip end of the member 5L respectively grip the right and left focus adjusting coupling shafts 13R and 13L to be rotatable. The guide shafts 12L and 12R are inserted in the members 5L and 5R in order to guide the movements of the above components. On the other hand, the diopter adjusting ring 302 is also equipped with a tip end portion 302a on which a male screw is formed on the outer periphery thereof. This tip end portion 302a is fitted in a female screw of the basic portion of a member 6. The tip end of the member 6 grips the diopter adjusting coupling shafts 103b to be rotatable. The guide shaft 12R is inserted in the member 6.

Since the movements of the focus adjusting ring 305 and the diopter adjusting ring 302 are restricted by the opening 301 of the base 3, these rings are not moved in the direction of the axis 3a, but are rotated on the spot. When the user rotates the focus adjusting ring 305, the male screw on the tip end 305a thereof is rotated so that the members 5L and 5R are moved along the guide shafts 12L and 12R, whereby the tip ends of the members 5L and 5R move the focus adjusting coupling shafts 13L and 13R in the axial direction. Therewith, the lens frames 14a and 15a are moved, and the focus adjusting lenses 14 and 15 are moved in the direction of the optical axes 201L and 201R, whereby the focus adjustment can be effected. Also, when the user rotates the diopter adjusting ring 302, the male screw on the tip end 302a thereof is rotated so that the member 6 is moved along the guide shaft 12R, whereby the tip end of the member 6 moves the diopter adjusting coupling shaft 103b in the axial direction. Therewith, the lens frame 103a of the right lens unit 2 is moved, and the right eyepiece 103R is moved along the optical axis 201R. With this operation, the diopter adjustment can be effected.

Next, description will be made on a process for conducting observation by the user using the binocular according to the present embodiment. First, prior to the observation, an eye cushion operation, an eye width adjustment, and a diopter adjustment are conducted as preparatory operations.

The eye cushion operation is conducted, when to be conducted by a glass wearer, by rotationally drawing the eye cushion 103c into the binocular body and, when to be conducted a person other than the glass wearer, rotationally drawing out the eye cushion 103c. With this operation, the eye point of the user and the eye point of the binocular are made in accordance, whereby an eclipse around the visual field for observation of the glass wearer can be prevented and, for the person who is not a glass wearer, a shadow in the view field can be prevented. The eye width adjustment is conducted by bending the right and left lens units 1 and 2 with respect to the base 3 in accordance with the eye width of the user, so as to change a distance between the visual fields of the lens units 1 and 2. More specifically, the user bends, while looking into the left and right lens units 1 and 2, the left and right lens units 1 and 2 with respect to the base 3 so that the view field of the left lens unit 1 gradually overlap with that of the right lens unit 2, thereby determining the distance between the left and right lens units 1 and 2 which finally have the single view field. With this operation, the distance between the optical axes 201L and 201R of the optical systems of the left and right lens units 1 and 2 can be made in accordance with the eye width of the user.

The diopter adjustment is an operation for compensating a dioptric difference between the left and right eyes of the user. First, the user, while looking into the left lens unit 1 with his left eye, rotates the focus adjusting ring 305 to bring a distant object to be observed into focus. After that, while looking into the right lens unit 2 with his right eye, the user rotates the diopter adjusting ring 302 this time, to bring the same object into focus. On this occasion, inside the binocular, upon rotation of the diopter adjusting ring 305, the member 6 is moved along the guide shaft 12R to move the eyepiece frame 103a, thereby moving the eyepiece 103R along the optical axis 201R. Upon this operation, the diopter adjustment is completed.

Upon completion of these preparatory operations, the user looks into the binocular with his both eyes, and rotates the focus adjusting ring 305 in accordance with a distance up to an object which the user actually wants to observe, i.e., the focusing distance. On this occasion, inside the binocular, upon rotation of the focus adjusting ring 305, the members 5L and 5R are respectively moved along the guide shafts 12L and 12R, and the focus adjusting lenses 14 and 15 are respectively moved along the optical axes 201L and 201R. Upon this operation, an image of the object to be observed can be excellently seen as a stereoscopic view image with the both eyes.

In order to stereoscopically view the object to be observed excellently with the both eyes, it is required to carry out the preparatory operations described above prior to the observation for each time. However, with respect to the diopter adjustment, if remembering an amount of the diopter adjustment with the specific binocular, the user can conduct the diopter adjustment simply by rotating the diopter adjusting ring 302 up to the position indicative of this amount of diopter adjustment from the next time. In case of the binocular of the present embodiment, the spiral curve 303 is formed on the outer peripheral surface of the diopter adjusting ring 302, as shown in Fig. 1, and the graduated scale 304 is drawn on the edge of the side 301a of the opening 301. Accordingly, when the user rotates the diopter adjusting ring 302, the spiral curve 303 serving as an indicator is moved in the direction of the axis 3a in proportion to the amount of rotation to appear on the upper surface, so that the spiral curve 303 can be easily confirmed from the upper surface of the base 3. Thus, the position at which the spiral curve 303 intersects the side 301a of the opening 301 can be easily read from the graduated scale 304 so that the amount of rotation (amount of diopter adjustment) can be easily recognized. The user can conduct the diopter adjustment easily by remembering this amount of rotation (amount of diopter adjustment) and rotating the diopter adjusting ring 302 in proportion to the amount of rotation from the next observation. Note that the position at which the spiral curve 303 intersects the side 301a of the opening 301 is arranged to move toward the objective side when the diopter adjusting ring 302 is rotated right and toward the ocular side when the diopter adjusting ring 302 is rotated left.

As described above, in the present embodiment, there is provided a structure in which the spiral curve 303 is formed on the outer peripheral surface as an indicator of the diopter adjusting ring 302 so that an amount of diopter adjustment can be easily recognized from the outer peripheral surface. With this structure, it is rendered possible to dispose the diopter adjusting ring 302 at the center of the base 3 without deteriorating the performance of visual recognition of the indicator of the diopter adjusting ring 302. As a result, both of the focus adjusting ring 305 and the diopter adjusting ring 302 are disposed together side by side in the opening 301 at the center of the base 3, as shown in Fig. 1, so that the degree of freedom in designing the binocular can be enhanced, whereby a binocular in a simple structure with satisfactory workability can be provided.

In addition, in the structure in which the diopter adjusting ring 302 and the focus adjusting ring 305 are disposed in the opening 301 at the center of the base 3, the base 3 itself has an improved rigidity, compared with that in the structure in which the diopter adjusting ring 302 is disposed on an end face of the base 3. As a result, it is rendered possible to reduce the length of the base 3 in the direction of the optical axes 201L and 201R while securely maintaining the rigidity of the base 3.

Though the first embodiment is structured such that the spiral curve 303 is formed on the outer peripheral surface of the diopter adjusting ring 302 and this outer peripheral surface is rotated by the user with his finger, it is possible to provide, in addition to the outer peripheral surface on which the spiral curve 303 of the diopter adjusting ring 302 is formed, a portion with which the user carries out the operation with his finger. For instance, it can be so arranged that a projection for the operation is disposed on the outer periphery of the diopter adjusting ring 302 so that this projection can be operated by the user. As this projection, for example, an operating ring having the diameter a size larger than that of the diopter adjusting ring 302 or a lever-like projection may be formed.

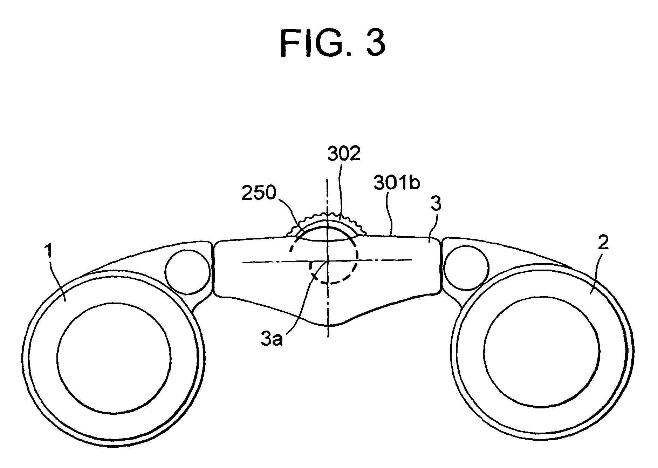

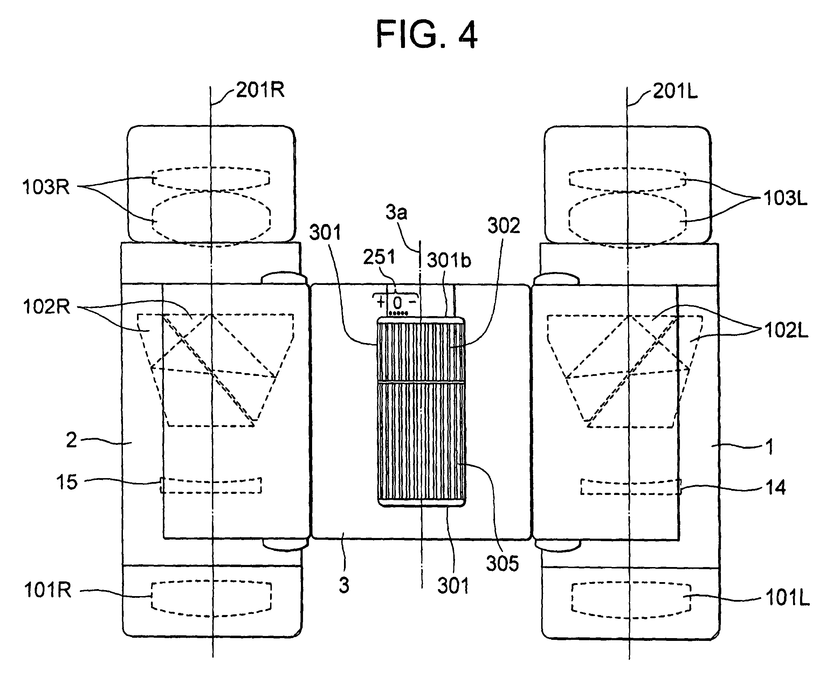

Next, a binocular according to the second embodiment of the present invention will be described with reference to Figs. 3 and 4.

The binocular according to the second embodiment comprises a vortical curve 250 which is formed on an end face on the ocular side of the diopter adjusting ring 302, as shown in Fig. 3, and a graduated scale 251 which is drawn on an edge of a side 301b on the ocular side of an opening 301 on the upper surface of the base 3, as shown in Fig. 4, to serve as indicators for indicating an amount of diopter adjustment (amount of rotation) of the diopter adjusting ring 302. The center of the vortex of the vortical curve 250 is an axis 3a. The vortical curve 250 is formed for the length to make a round of the diopter adjusting ring 302 around the axis 3a as the center so that the vortical curve does not exist doubly at the same angle of rotation.

When the diopter adjusting ring 302 is rotated, the position at which the vortical curve 250 intersects one side 301b of the opening 301 is moved along the radial direction of the diopter adjusting ring 302 in accordance with the amount of rotation. As a result, the amount of diopter adjustment (amount of rotation) of the diopter adjusting ring 302 can be obtained by reading this position of intersection from the graduated scale 251.

The structure of the binocular of the second embodiment is the same as that of the first embodiment except the indicator, so that the description thereof will be omitted.

According to the binocular of the second embodiment, the user can visually confirm the vortical curve 250 and the graduated scale 251 to obtain the amount of diopter adjustment by observing the end face of the diopter adjusting ring 302 from obliquely above on the ocular side. As a result, the binocular has an advantage that the user can, in order to confirm the amount of diopter adjustment, have the vortical curve 250 and the graduated scale 251 within his visual range without largely averting his gaze from a state of looking into the lens units 1 and 2 so that the amount of diopter adjustment can be confirmed.

Note that, in the description the spiral curve 303 is formed in the first embodiment while the vortical curve 250 is formed in the second embodiment. However, it is suffice if the spiral curve 303 or the vortical curve 250 is formed in a manner that is recognizable for the user. For instance, each of the curves may be formed as a carved line, a crease-like projection, or a light curve.

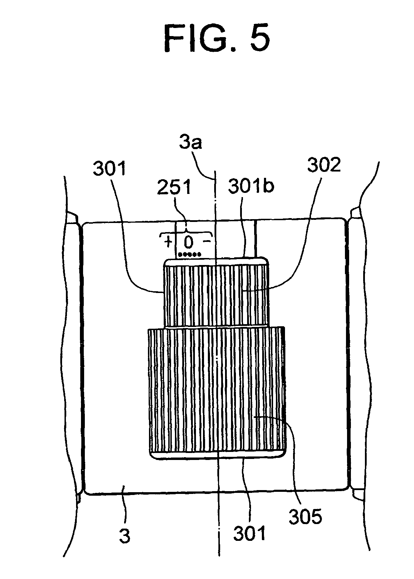

Fig. 5 is a top view of a binocular according to a third embodiment of the present invention, for showing the essential part thereof only.

In this embodiment, it is arranged such that the diameter of the adjusting ring 302 disposed near to the eyepieces is smaller than the diameter of the adjusting ring 305 disposed on the objective side, as shown in Fig. 5. In case of such a structure, it is preferable that an opening on the base 3 is formed in accordance with the respective sizes or forms of the adjusting rings.

Note that the relationship between the outer diameters of the both adjusting rings may be reverse of that in the above embodiment.

With this structure, the user of the binocular can recognize a difference between the both adjusting rings by manually confirming a difference in the size between the both adjusting rings, without directly confirming the diopter adjusting ring and the focus adjusting ring.

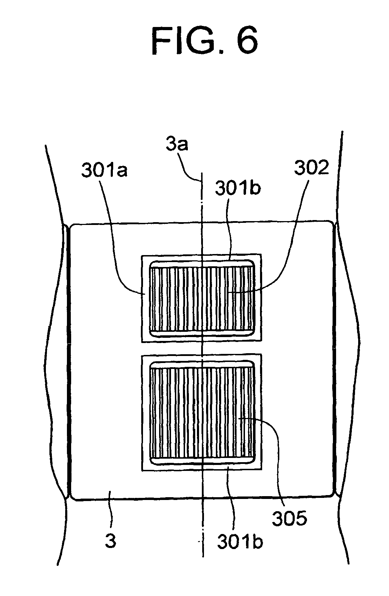

Fig. 6 is a top view of a binocular according to a fourth embodiment of the present invention, for showing the essential part thereof only.

In the foregoing embodiments, as shown in Fig. 5, both of the diopter adjusting ring 302 and the focus adjusting ring 305 are disposed in the single opening 301 formed on the base 3. However, in the fourth embodiment shown in Fig. 6, the support base 3 is formed with two openings 301a, 301b, along a same axis 3a, and the diopter adjusting ring 302 and the focus adjust ring 305 are disposed in the respective openings 301a and 302b.

The outer diameter in a cross section of the diopter adjusting ring 302 perpendicular to the optical direction may be different from that of the focus adjusting ring 305.

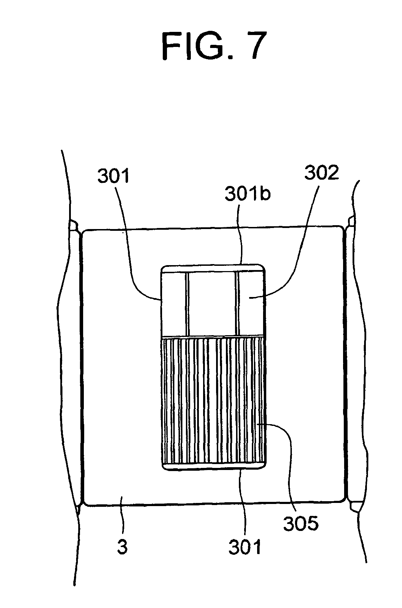

Fig. 7 is a top view of a binocular according to a fifth embodiment of the present invention, for showing the essential part thereof only.

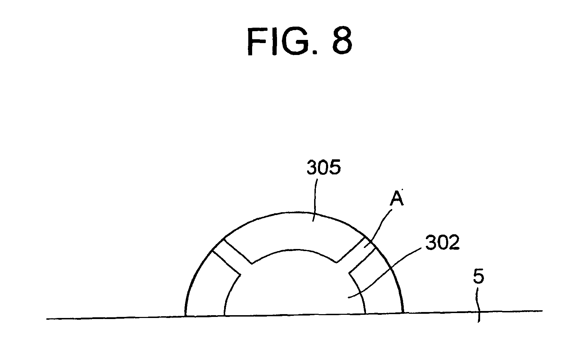

In this fifth embodiment, the pitch or contour of the longitudinal projection-and-grooves on the outer peripheral surface of the diopter adjusting ring 302 is different from that of the focus adjusting 305. In more detail, in this embodiment, the number of the longitudinal projection-and-grooves on the outer peripheral surface of the diopter adjusting ring 302 is less than that of longitudinal projection-and-grooves on the outer peripheral surface of the focus adjusting 305, and the height of the longitudinal projections A is so high as shown in Fig. 8.

## Claims

1. A binocular comprising left and right lens units (1, 2), which are parallel to one another with a predetermined distance therebetween and each of which includes an eye piece lens unit (103), an objective lens unit (101) and an intermediate lens unit (102) connected therebetween, a support base (3) connecting the left and right lens units (1, 2), and a diopter adjusting ring (302) and a focus adjusting ring (305) disposed on said base (3), wherein
said left and right lens units (1, 2) are disposed on opposite ends of said base (3) to be rotatable relative to the base (3) to adjust the distance between the left and right lens units (1,2);
said base (3) includes a top face that spans the distance between the right and left lens units and has front and rear sides substantially perpendicular to the optical axes of the right and left lens units;
**characterised in that** said top face of said base is formed either
with a substantially rectangular opening (301) spaced from said right and left lens units and from said front and rear sides so as to be surrounded by said top face; and said diopter adjusting ring (302) and said focus adjusting ring (305) are rotatably disposed side by side in said opening and are exposed for manual adjustment or
with first and second substantially rectangular openings (301a, 301b) side by side spaced from said right and left lens units and from said front and rear sides so as to be surrounded by said top face, and said diopter adjusting ring (302) and said focus adjusting ring (305) are disposed in said first and second openings (301a, 301b), respectively, and are exposed for manual adjustment.

2. A binocular according to claim 1, wherein an outer peripheral surface of said diopter adjusting ring (302) is formed with a spiral curve (303) as an indicator for indicating an amount of rotation of said diopter adjusting ring (302).

3. A binocular according to claim 1, wherein said diopter adjusting ring (302) is disposed on the ocular side, compared with said focus adjusting ring (305) and an end face on the ocular side of said diopter adjusting ring (302) is formed with a vortical curve (250) as an indicator for indicating an amount of rotation of said diopter adjusting ring (302).

4. A binocular according to claim 1, wherein both of said diopter adjusting ring (302) and said focus adjusting ring (305) are supported by a single support shaft (5) and said both rings are disposed in parallel in the direction of the optical axes of said lens units.

5. A binocular according to claim 1, wherein the outer diameter of said diopter adjusting ring (302) in a cross section perpendicular to the direction of the optical axes of said lens units is different from that of said focus adjusting ring (305).

6. A binocular according to claim 1, wherein out of said diopter adjusting ring (302) and said focus adjusting ring (305), the outer diameter of an adjusting ring closer to the eyepieces (103) of said lens units is smaller than the outer diameter of an adjusting ring closer to objective lenses (101) of said lens units.

7. A binocular according to claim 2, wherein said diopter adjusting ring (302) is disposed in an opening (301) formed on said base and a graduated scale (304) is formed on the edge of said opening (301) for showing a position at which said spiral curve intersects one side of said opening.

## Patentansprüche

1. Ein Fernglas, welches ein rechtes und ein linkes Linsenelement (1, 2)umfasst, die parallel zueinander sind und einen vorgeschriebenen Abstand dazwischen haben und von denen jedes ein Okularlinsenelement (103), ein Objektivlinsenelement (101), ein dazwischen verbundendes Linsenelement (102), eine Halterungsbasis (3) die das linke und das rechte Linsenelement verbindet (1, 2), und einen Dioptrie einstellungsring (302) und einen Fokussierungsring (305) auf der Basis aufweist, wobei
das rechte und das linke Linsenelement (1, 2) an entgegengesetzten Enden der Halterungsbasis (3) angeordnet sind und relativ zu der Halterungsbasis (3) rotierbar sind, um die Distanz zwischen dem linken und dem rechtem Linsenelement (1, 2) zu justieren;
die Basis (3) e ine Oberseite umfasst, die sich über die Entfernung vom linken bis zum rechten Linsenelement erstreckt, und Vorderseiten und Rück - seiten, die im wesentlichen senkrecht auf den optischen Achsen der rechten und linken Linsenelemente stehen;
**dadurch gekennzeichnet, dass** die Oberseite der Basis entweder
mit einer im wesentlichen rechteckigen Öffnung (301) geformt ist, die in einem Abstand von den rechten und linken Linsenelementen und den Vorder - und Rückseiten positioniert ist so dass sie von der Oberseite umgeben ist; und der Dioptrieein stellungsring (302) und der Fokussierungsring (305) nebeneinander, drehbar in der Öffnung angebracht sind und zugänglich für manuelle Justierung sind, oder
mit ersten und zweiten, Seite an Seite liegenden, im wesentlichen rechteckigen Öffnungen (301a, 301b), die in einem Abstand von den rechten und linken Linsenelementen und den Vorder - und Rückseiten positioniert sind so dass sie von der Oberseite umgeben sind, und der Dioptrieeinstellungsring (302) und der Fokussierungsring (305) jeweils in der ersten und zweiten Öffnung (301a, 301b) angebracht und zugänglich für manuelle Justierung sind.

2. Ein Fernglas nach Anspruch 1, wobei eine Außenfläche des Dioptrieeinstellungsringes (302) aus einer spiralförmigen Kurve (303) geformt i st, die als Indikator agiert, um die Anzahl der Rotationen des Dioptrieein - stellungsringes (302) anzuzeigen.

3. Ein Fernglas nach Anspruch 1, wobei der Dioptrieein - stellungsring (302) an der Okularseite angebracht ist, verglichen mit dem Fokussierungsring (3 05), und wobei die Endseite des Dioptrieeinstellungsringes (302), die auf der Okularseite liegt, aus einer spiralförmigen Kurve (250) geformt ist und das Maß der Rotation des Dioptrieeinstellungsringes (302) anzeigt.

4. Ein Fernglas nach Anspruch 1, wobei so wohl der Dioptrieeinstellungsring (302) als auch der Fokussierungsring (305) von einem einzelnen Halte - schaft (5) gehalten werden und beide Ringe parallel zueinander entlang der optischen Achsen der Linsenelemente angebracht sind.

5. Ein Fernglas nach Anspruch 1, wobei der äußere Umfang des Dioptrieeinstellungsrings (302) in einem Querschnitt senkrecht zu den optischen Achsen der Linsenelemente unterschiedlich ist von dem des Fokussierungsringes (305).

6. Ein Fernglas nach Anspruch 1, wobei aus dem Dioptrie - einstellungsring (302) und dem Fokussierungsring (305), der äußere Diameter eines Einstellungsringes, der näher an dem Okular der Linsenelemente liegt, kleiner ist als der äußere Diameter eines Ein - stellungsringes, der näher an der Objektivlinse der Linsenelemente liegt.

7. Ein Fernglas nach Anspruch 2, wobei der Dioptrie - einstellungsring (302) in einer Öffnung (301) in der Halterungsbasis geformt ist, und eine Markierungsskala am Rand der Öffnung geformt ist, um anzuzeigen, wo die spiralförmige Kurve eine Seite der Öffnung schneidet.

## Revendications

1. Jumelle binoculaire comprenant des éléments de lentilles gauche et droite (1,2) qui sont parallèles l'un par rapport à l'autre d'une distance prédéterminéc entre eux et chacun d'entre eux comprenant un élément de lentille oculaire (103), un élément de lentille d'objectif (101) et un élément de lentille intermédiaire (102) reliés entre eux, un support (3) reliant les éléments de lentilles droite et gauche (1,2), une bague de mise au point à dioptries (302) et une bague de réglage de la netteté (305) placée sur ledit support (3), où
lesdits éléments de lentilles gauche et droite (1,2) sont positionnés sur les extrémités opposées dudit support (3) de manière à pouvoir tourner par rapport au support (3), afin de régler la distance entre les éléments de lentilles gauche et droite (1,2) ;
ledit support (3) comprend une face supérieure qui couvre la distance entre les éléments de lentilles droite et gauche et des faces frontale et arrière sensiblement perpendiculaires aux axes optiques des éléments de lentilles droite et gauche ;
**caractérisé en ce que** ladite face supérieure dudit support est formée soit d'une ouverture sensiblement rectangulaire (301) séparé desdits éléments de lentilles droite et gauche et desdites faces frontale et arrière de sorte qu'ils sont cernés par ladite face supérieure ; et ladite bague de mise au point à dioptries (302) et ladite bague de réglage de la netteté (305) sont disposées côte à côte en rotation dans ladite ouverture et sont dégagées pour permettre un réglage manuel, soit d'une première et d'une seconde ouvertures sensiblement rectangulaires (301a, 301b) placés côte à côte, séparés desdits éléments de lentilles droite et gauche et desdites faces frontale et arrière, de sorte qu'ils sont cernés par ladite face supérieure, et ladite bague de mise au point à dioptries (302) et ladite bague de réglage de la netteté (305) sont placées dans lesdites première et seconde ouvertures (301a, 301b), respectivement, et sont dégagées pour permettre un réglage manuel.

2. Jumelle binoculaire selon la revendication 1, dans laquelle une surface périphérique exteme de ladite bague de mise au point à dioptries (302) est formée d'une courbe en spirale (303) qui sert d'indicateur pour indiquer la valeur de rotation de ladite bague de mise au point à dioptries (302).

3. Jumelle binoculaire selon la revendication 1, dans laquelle ladite bague de mise au point à dioptries (302) est placée sur le côté oculaire, comparée à ladite bague de réglage de la netteté (305) et une surface terminale sur le côté oculaire de ladite bague de mise au point à dioptries (302) est formée d'une courbe en spirale (250) qui sert d'indicateur pour indiquer une valeur de rotation de ladite bague de mise au point à dioptries (302).

4. Jumelle binoculaire selon la revendication 1, dans laquelle à la fois ladite bague de mise au point à dioptries (302) et ladite bague de réglage de la netteté (305) sont supportées par un seul arbre servant de support (5) et lesdites deux bagues sont disposées en parallèle dans la direction des axes optiques desdits éléments de lentilles.

5. Jumelle binoculaire selon la revendication 1, dans laquelle le diamètre extérieur de ladite bague de mise au point à dioptries (302) en coupe transversale perpendiculairement à la direction des axes optiques desdits éléments de lentilles est différent de celui de ladite bague de réglage de la netteté (305).

6. Jumelle binoculaire selon la revendication 1, dans laquelle en dehors de ladite bague de mise au point à dioptries (302) et de ladite bague de réglage de la netteté (305), le diamètre extérieur d'une bague de réglage plus proche des oculaires (103) desdits éléments de lentilles est plus petit que le diamètre extérieur d'une bague de réglage plus proche des lentilles de l'objectif (101) desdits éléments de lentilles.

7. Jumelle binoculaire selon la revendication 2, dans laquelle ladite bague de mise au point à dioptries (302) cst placée dans une ouverture (301) formé sur ledit support et une échelle graduée (304) est formée sur le bord de ladite ouverture (301) pour indiquer une position dans laquelle ladite courbe en spirale croise un côté de ladite ouverture.
